Europäisches Patentamt

European Patent Office

Office européen des brevets

(19)

(11) Veröffentlichungsnummer: **0 189 808 B1**

(12) **EUROPÄISCHE PATENTSCHRIFT**

(45) Veröffentlichungstag der Patentschrift: **24.04.91**

(51) Int. Cl.5: **B29C 59/16**, //B29K23:00, B29K67:00,B29L7:00

(21) Anmeldenummer: **86100657.5**

(22) Anmeldetag: **20.01.86**

(54) **Verfahren zur Herstellung einer heisssiegelfähigen Verpackungsfolie.**

(30) Priorität: **01.02.85 US 697313**

(43) Veröffentlichungstag der Anmeldung:
**06.08.86 Patentblatt 86/32**

(45) Bekanntmachung des Hinweises auf die
Patenterteilung:
**24.04.91 Patentblatt 91/17**

(84) Benannte Vertragsstaaten:
**DE FR GB LU NL**

(56) Entgegenhaltungen:
**EP-A- 0 004 963       EP-A- 0 022 184
DE-A- 1 629 772       DE-C- 1 077 279
GB-A- 805 819         US-A- 2 876 185
US-A- 3 036 930**

(73) Patentinhaber: **HOECHST CELANESE CORPO-
RATION
Route 202-206 North
Somerville, N.J. 08876(US)**

(72) Erfinder: **Scott, Caines R.
108 Gilford Lane
Taylors South Carolina 29687(US)**

(74) Vertreter: **Güthlein, Paul, Dr. et al
KALLE Niederlassung der Hoechst AG Patentabteilung Postfach 3540 Rheingaustrasse 190
W-6200 Wiesbaden 1(DE)**

## Beschreibung

Die Erfindung betrifft ein Verfahren zur Herstellung einer heißsiegelfähigen Verpackungsfolie aus thermoplastischem Kunststoff gemäß Oberbegriff des Anspruchs 1 und eine nach diesem Verfahren Hergestellte Folie gemäß Oberbegriff des Anspruchs 5.

Allgemein ist bekannt, daß biaxial orientierte Polyethylenterephthalatfolie sich nicht heißsiegeln läßt, weil die Folie bei der zum Anschmelzen notwendigen hohen Temperatur (256°C) Schaden nimmt. Es sind zahlreiche Haftschichten beschrieben, die zur Verbesserung der Heißsiegelbarkeit auf Polyesterfolie aufgebracht werden, und eine Reihe solcher beschichteten Folien ist im Handel erhältlich.

Aus GB-A-1 078 813 ist zum Beispiel eine heißsiegelbeschichtete Polyethylenterephthalatfolie bekannt. In dieser Druckschrift wird ein Verfahren zur Herstellung einer heißsiegelbeschichteten, biaxial orientierten Polyethylenterephthalatfolie beschrieben, das die folgenden Schritte umfaßt: Schmelzextrudieren einer im wesentlichen amorphen Polyesterfolie, Strecken der Folie in Längsrichtung, Aufbringen einer Heißsiegelschicht auf eine oder beide Seiten der Folie und dann Strecken der beschichteten Folie in Querrichtung. Die Heißsiegelschicht kann in Form einer Schmelze, einer Lösung in einem organischen Lösemittel oder einer wäßrigen Dispersion aufgebracht werden. Polymere, die sich in schmelzflüssigem Zustand gut als Heißsiegelschicht auf die Folie aufbringen lassen,sind zum Beispiel Polyethylen und Polypropylen. Polymere Beschichtungen, die als Lösungen oder wäßrige Dispersionen aufgebracht werden können, bestehen zum Beispiel aus Vinylidenchlorid und Copolymeren von Vinylidenchlorid mit Acrylnitril und/oder Itaconsäure und/oder Methacrylsäure, Polyvinylacetat, teilweise hydrolisiertem Polyvinylacetat, Copolymeren von Vinylchlorid und Vinylacetat, Butadien-Acrylnitril-Copolymeren, Butadien-Styrol-Copolymeren, Butadien-Methylmethacrylat-Copolymeren, Butadien-Methylmethacrylat-Styrol-Copolymeren, Methylmethacrylat-Methacrylsäure-Copolymeren, Copolyestern aus Terephthalsäure und einer anderen Dicarbonsäure mit einem Glykol, zum Beispiel solche, die höchstens 4,0 Einheiten Terephthalsäure auf eine Einheit Sebacinsäure enthalten, Copolymeren von Vinylidenchlorid und Vinylchlorid oder Alkylacrylaten, Copolymeren von Vinylacetat mit Vinylchlorid, Copolymeren von Vinylacetat mit Ethylen und Copolymeren von Vinylchlorid mit Ethylen.

Durch die Anwesenheit der Heißsiegelschichten wird aber das Recycling von während der Herstellung von Polyethylenterephthalatfolie (PET-Folie) anfallendem Folienverschnitt erschwert, da die Beschichtung das Polymere verunreinigt. Ferner kann nach den geltenden gesetzlichen Regelungen, z.B. der Vorschriften der Food and Drug Administration (21 C.F.R. 177,1630 ff), die beschichtete Polyesterfolie durch die thermoplastische Beschichtung für Lebensmittelverpackungen ungeeignet sein.

Im Stand der Technik werden auch Terephthalat-Comonomere wie z.B. Isophthalsäure zur Herstellung von Copolyestern verwendet, die sich besser zum Heißsiegeln eignen als Polyethylenterephthalat-Homopolyester. Dabei kann die Polyesterfolie selbst aus dem Copolyester bestehen, oder es kann eine zweite Copolyesterfolie auf eine erste Folie aus Polyethylenterephthalat-Homopolyester auflaminiert werden. Ein Copolyester/Polyester-Laminat ist zum Beispiel aus EP-A-0 035 835 bekannt. In dieser Patentanmeldung wird eine Polyesterverbundfolie beschrieben, die aus einer orientierten Schicht aus einem ersten linearen Polyester und einer an dieser Grundschicht haftenden heißsiegelbaren zusätzlichen Schicht aus einem im wesentlichen amorphen zweiten linearen Polyester besteht. Diese zusätzliche Schicht enthält 0,005 bis 10 Gew.-%, bezogen auf das Gewicht des zweiten linearen Polyesters, eines im wesentlichen gleichmäßig in der zusätzlichen Schicht verteilten feinteiligen, partikelförmigen Additivs, dessen mittlere Teilchengröße größer ist als die Dicke der zusätzlichen Schicht. Die freiliegende Oberfläche der zusätzlichen Schicht weist das Blocken verhindernde Erhebungen auf, die durch das partikelförmige Additiv gebildet werden. Grundschichten aus Polyethylenterephthalat sind besonders bevorzugt. Der zweite lineare Polyester der zusätzlichen Schicht ist vorzugsweise ein Copolyester, abgeleitet von mindestens einer der Säuren Terephthalsäure, Isophthalsäure und Hexahydroterephthalsäure und mindestens einem Glykol, vorzugsweise Ethylenglykol. Die zusätzlichen Schichten können auf einer oder beiden Seiten der Grundschicht angeordnet sein. Bei der Verwendung von Copolyesterfolien ergeben sich ebenfalls Verarbeitungsnachteile,insbesondere bei der Rückgewinnung von Polyesterfolienverschnitt.

Eine im Stand der Technik vorgeschlagene dritte Lösung besteht in der Modifizierung der Oberfläche einer biaxial orientierten Polyethylenterephthalatfolie durch Flamm-, Corona- oder UV-Strahlungsbehandlung. Die GB-A-1 117 354, von welcher die Oberbegriffe der Ansprüche 1 und 5 ausgehen, beschreibt orientierte und hitzefixierte Polyethylenterephthalatfolien mit einer Oberflächenschicht aus amorphem, nicht orientiertem Polymeren. Eine solche Folie kann nach einem Verfahren hergestellt werden, bei dem man eine gestreckte und hitzefixierte Polyethylenterephthalatfolie so über eine gekühlte oder rotierende Walze führt, daß eine Oberfläche der Folie ständig in Kontakt mit dieser Walze ist, während ein begrenzter Bereich der Foliengegenseite gleichzeitig einer Flamme von großer Hitze ausgesetzt wird. Die Fortbewe-

EP 0 189 808 B1

gungsgeschwindigkeit der Folie ist dabei so bemessen, daß die Verweilzeit eines jeden Punkts in dem aufgeheizten Folienbereich ausreicht, um die Folienoberfläche an diesem Punkt anzuschmelzen, jedoch nicht lang genug ist, um die Folie zu verformen. Bei biaxial orientierten Folien, deren Oberfläche auf diese Weise modifiziert wurde, ergibt sich kein wesentlicher Verlust an Zugfestigkeit. Aus der genannten britischen Patentschrift ist bekannt, daß nach dem beschriebenen Verfahren hergestellte Folien miteinander verschweißt werden können, indem man sie bei einer Temperatur zwischen 80° C und dem Schmelzpunkt des Polyethylenterephthalats, vorzugsweise bei einer Temperatur, die mindestens um 30° C unter dem Schmelzpunkt des Polyethylenterephthalatsliegt, und unterhalb der Temperatur, bei der die Folie hitzefixiert wurde, zusammenpreßt. Je höher die Heißsiegeltemperatur ist desto schneller kann das Heißsiegeln erfolgen. Die bevorzugte Heißsiegeltemperatur liegt zwischen 120 und 180° C. Solche Polyethylenterephthalatfolien können zur Herstellung von Gegenständen wie z.B. Beuteln verwendet werden, indem sie an ihren Rändern miteinander verschweißt werden. Das Patent gibt an, daß die amorphe Oberfläche des biaxial orientierten Polyesters den Widerstand der Folie gegen Einreißen und Weiterreißen erhöht.

Das obengenannte Flammverfahren erfordert eine genaue Steuerung der Verfahrensparameter wie z.B. Stellung des Brenners, Folienlaufgeschwindigkeit, Temperatur und Größe der Flamme. Man nimmt an, daß eine solche oberflächenmodifizierte, biaxial orientierte Polyesterfolie trotz genauester Steuerung der Parameter Ungleichmäßigkeiten in der Oberflächenmodifizierung aufweisen kann. Wenn beispielsweise die Flamme kurzzeitig stärker wird, kann es geschehen, daß die Polyesterfolie nicht nur an ihrer Oberfläche die Orientierung verliert, sondern insgesamt schmilzt oder sogar zu brennen beginnt. Wird dagegen die Flamme kurzzeitig schwächer, bleibt die Folienoberfläche möglicherweise von dem Verfahren völlig unbeeinflußt. Weitere Probleme bei der Flammbehandlung von Folien aus thermoplasischen Polymeren werden in US-A-3 145 242 erörtert.

Die GB-A-1 149 812 beschreibt die Behandlung von biaxial orientierter Polyesterfolie zur Verbesserung ihrer Haftungsfähigkeit gegenüber photographischen Emulsionsbeschichtungen mit ultravioletter Strahlung. Wie in diesem Dokument beschrieben, muß eine Lösung aus Gelatine oder einem hydrophilen Harz in einem organischen Lösemittelgemisch mit einem Gehalt von 1 bis 25 Gew.-% an einem Quellmittel aufgebracht werden. Die UV-Strahlung kann eine Wellenlänge im Bereich von 180 bis 320 nm haben, und die Bestrahlung erfolgt vorzugsweise entweder während oder nach der biaxialen Orientierung bei einer Temperatur von 150 bis 250° C.

Die vorliegende Erfindung hat es sich zur Aufgabe gemacht, ein einfach durchführbares und leicht steuerbares Verfahren zu entwickeln, mit dem heißsiegelfähige Verpackungsfolien hergestellt werden können, die neben ihrer guten Siegelfähigkeit außerdem ohne Bedenken für die Verpackung von Lebensmitteln eingesetzt werden können, wobei die Folien in unmittelbaren Berührungskontakt mit dem Packgut kommen können, und die außerdem problemlos als Regenerat in den Folienherstellungsprozeß zurückgeführt werden können.

Gelöst wird diese Aufgabe durch ein Verfahren der eingangs genannten Art, das dadurch gekennzeichnet ist, daß eine Folie aus nicht siegelfähigem thermoplastischem Kunststoff auf wenigstens einer Oberfläche mit Impulsen elektromagnetischer Strahlung einer Wellenlänge im Bereich des infraroten bis ultravioletten Lichtes behandelt wird, wobei die Strahlungsimpulse eine Dauer im Bereich von 0,2 bis 2 ms haben.

Eine Bestrahlung von Folien mit elektromagnetischen Strahlen kurzwelliger Art, insbesondere mit UV-, Gamma- und Röntgenstrahlen, ist aus der EP-A-0 022 184 bekannt. Diese Bestrahlung bewirkt jedoch eine Vernetzung der Folienschicht, wobei sich zeigt, daß eine eventuell vorhandene Siegelfähigkeit durch die Vernetzung verlorengeht. Auch die DE-A-1 629 772 beschreibt eine Behandlung einer Folie mit UV-, Alpha-, Beta-, Gamma- oder Röntgenstrahlung. Diese Behandlung führt aber zu einer lackartigen Verhärtung der behandelten Oberfläche, wodurch die Siegelfähigkeit verlorengeht.

Überraschenderweise wurde herausgefunden, daß auf herkömmliche Weise hergestellte, biaxial streckorientierte Folie aus thermoplastischem Kunststoff zur Erzeugung von Heißsiegelfähigkeit modifiziert werden kann, indem ihre Oberfläche kurzzeitig starkem Licht ausgesetzt wird.

Die Erfindung läßt sich auf die meisten streckorientierten Folien aus thermoplastischem Kunststoff inklusive Polyolefine, wie z.B. Polyethylen und Polypropylen, Polyamide, wie Nylon, und Polyester, wie Polyethylenterephthalat, anwenden. Dabei werden die Polyester bevorzugt. Die Folie kann prinzipiell einschichtig oder mehrschichtig sein. Bei Mehrschichtfolien wird die mit den Impulsen elektromagnetischer Strahlung behandelte Schicht heißsiegelfähig. Im weiteren Verlauf der Beschreibung wird die Erfindung am Beispiel von Polyesterfolie näher erläutert.

Die chemische Zusammensetzung der Polyesterfolie, deren Oberfläche heißsiegelbar werden soll, ist für die vorliegende Erfindung nicht von ausschlaggebender Bedeutung. Biaxial orientiertes Polyethylenterephthalat wird jedoch bevorzugt. Beispiele für weitere Polyester sind Polybutylenterephthalat, Polyethylenisophthalat sowie Copolyester wie z.B. Polyethylenterephthalat/Polyethylenisophthalat.

Die bei der Herstellung von Folie aus thermoplastischen Kunststoffen durchzuführenden Extrusions-, Orientierungs- und Kristallisationsschritte sind bekannt. Gewöhnlich wird eine Schmelze aus polymerem Harz hergestellt und durch eine Schlitzdüse zu einer amorphen Folie auf eine polierte, rotierende Gießtrommel extrudiert, wo sich eine amorphe Vorfolie aus dem Polymeren ausbildet. Anschliessend wird die Folie streckorientiert, und zwar bei einer monoaxial orientierten Folie lediglich in einer Richtung, d.h. entweder in Extrusionsrichtung (längs) oder senkrecht zur Extrusionsrichtung (quer), und bei einer biaxial orientierten Folie in zwei Richtungen, d.h. sowohl in Längs- als auch in Querrichtung. Der erste an der Vorfolie durchgeführte Streckschritt kann beliebig in einer der beiden rechtwinklig zueinander verlaufenden Richtungen erfolgen. Um der Folie Festigkeit und Zähigkeit zu verleihen, wird etwa um das 3,0- bis 5,0fache der ursprünglichen Abmessungen der Vorfolie in einer oder beiden Richtungen gestreckt. Der Verstreckungsgrad liegt vorzugsweise etwa zwischen dem 3,2- und 4,2fachen der ursprünglichen Abmessungen. Während der Streckschritte liegen die Temperaturen im Bereich zwischen der Glasübergangstemperatur bis unterhalb der Temperatur, bei der das Polymere weich wird und schmilzt. Bei Polyethylenterephthalatfolie liegen die Strecktemperaturen normalerweise im Bereich von 80 bis 100° C.

Nach dem Strecken wird die Folie unter Fixierung der Abmessungen für die zur Kristallisation bzw. "Hitzefixierung" der Folie erforderliche Zeitspanne wärmebehandelt. Durch die Kristallisation erhält die Folie Dimensionsstabilität und gute Zugfestigkeitseigenschaften. Polyethylenterephthalat wird bei einer Temperatur im Bereich von etwa 190 bis 240° C, vorzugsweise von etwa 215 bis 235° C, wärmebehandelt.

Die Oberfläche der biaxial orientierten und hitzefixierten Polyesterfolie wird heißsiegelbar, indem sie mindestens einem starken Lichtimpuls oder Lichtblitz ausgesetzt wird. Nach derzeitigen Erkenntnissen wird angenommen, daß der starke Lichtblitz eine Entorientierung der Polyestermoleküle unmittelbar an der Folienoberfläche bewirkt. Welcher Art auch immer die durch den Lichtblitz hervorgerufene tatsächliche strukturelle oder physikalisch-chemische Veränderung in der Folienoberfläche sein mag, es hat sich gezeigt, daß durch die beschriebene Behandlung die Heißsiegelbarkeit von biaxial orientierter und hitzefixierter Polyesterfolie verbessert wird. Die gute Zugfestigkeit der Folie wird durch das erfindungsgemäße Verfahren nicht meßbar herabgesetzt.

Die vorliegende Erfindung befaßt sich mit der Gesamtmenge an Strahlungsenergie E, die während einer Zeiteinheit auf eine Flächeneinheit der Folienoberfläche auftrifft. Die bevorzugte Strahlungsenergie liegt im Bereich von 7 bis 14 Joule je $cm^2$ Folienoberfläche. Die Zeiteinheit soll möglichst kurz sein, um die Entorientierung der Folie unter der Oberfläche auf ein Mindestmaß zu begrenzen, deswegen liegt sie erfindungsgemäß im Bereich von 0,2 bis 2 ms.

Prinzipiell können verschiedene Arten von lichtstarken Kurzzeitbestrahlungssystemen bei dem erfindungsgemäßen Verfahren eingesetzt werden. Es können zum Beispiel Flash-Photolyse- und Flash-Polymerisationssysteme für die vorliegende Erfindung geeignet sein. Bei der praktischen Durchführung der Erfindung wurden mit Xenongas gefüllte, lineare Quarzröhren als Lichtquelle verwendet. Diese mit Xenon gefüllten Röhren senden ein breites Strahlungsspektrum mit Wellenlängen von Infrarot bis Ultraviolett aus. Die Röhren sind luftgekühlt und im Innenraum eines Aluminiumreflektors angeordnet. An jedem Röhrenende befinden sich Metallelektroden, die durch eine entsprechende Schaltungsanordnung mit einem Netzteil und Hochleistungskondensatoren verbunden sind. Die Xenonlampe blitzt, wenn sich der Kondensator entlädt. Die Maxwell Laboratories, 8835 Balboa Avenue, San Diego, Kalifornien 92123, USA, bieten verschiedene Modelle von Xenonblitzlampen an, die alle zur Durchführung des erfindungsgemäßen Verfahrens geeignet sind.

Während der ersten Versuche zur Durchführung des erfindungsgemäßen Verfahrens wurde die Folienoberfläche teilweise mit zu hoher Strahlungsenergie beaufschlagt, was zur Bildung von Ruß auf der Folienoberfläche führte. Der Ruß ist das Ergebnis einer durch den Blitz verursachten oberflächlichen Verbrennung. Man stellte fest, daß beim Einsatz von zuviel Strahlungsenergie vergleichsweise dünne Polyesterfolien leichter zum Verbrennen und/oder zur Faltenbildung neigten als dickere Folien.

Obwohl die Bestrahlung der gesamten Folienoberfläche im Rahmen der vorliegenden Erfindung möglich ist, besteht die bevorzugte Ausführung jedoch in der Bestrahlung nur eines Teils der Folienoberfläche, wodurch ausgewählte Streifen oder Bereiche mit verbesserter Heißsiegelbarkeit entstehen. Derartige heißsiegelfähige orientierte Folien sind für viele Verpackungszwecke geeignet.

Ausführungsbeispiele

Die praktische Durchführung und die Vorteile dieser Erfindung werden in den folgenden Beispielen näher beschrieben. Mit den Beispielen soll die Erfindung näher erläutert, jedoch in keiner Weise eingeschränkt werden.

Der nachfolgend beschriebene "Chloroformtest" zeigt qualitativ und optisch das Vorhandensein oder Fehlen der biaxialen Orientierung an der Oberfläche einer Polyesterfolie an. In diesem Test wird ein Tropfen Chloroform auf die Folienoberfläche aufgebracht. Wenn die Folie eine ausgeprägte biaxiale Orientierung besitzt, dringt das Chloroform nicht in die Folienoberfläche ein, und die Folie bleibt klar. Bei einer nur unbedeutenden biaxialen Orientierung dringt das Chloroform dagegen in die Oberfläche der Polyesterfolie ein und macht den betroffenen Bereich durch Lösemittelkristallisation opak.

Die Heißsiegelfähigkeit wurde qualitativ gemessen, indem man zwei Abschnitte der gleichen Folienprobe aufeinanderfaltete, die Abschnitte durch Heißsiegeln miteinander verband und versuchte, die Heißsiegelung von Hand auseinanderzuziehen. Bei dünnen Folien, z.B. 12 und 15 /um dicker Polyesterfolie, macht die relativ geringe Folienfestigkeit der Proben eine genaue Messung unmöglich. Wenn eine dünne Folienprobe reißt, bevor die Heißsiegelung sich auftrennt, wird die Heißsiegelung als "gut" betrachtet. Umgekehrt, wenn die Heißsiegelung sich auftrennt, bevor die Folie reißt, gilt die Heißsiegelung als "schlecht". Relativ dicke Folien, z.B. 75 μm dicke Polyesterfolie,besitzen eine größere Festigkeit, so daß der Haftungsgrad der Heißsiegelung exakter bewertet werden kann.

Beispiel 1

Elf Proben aus 15 μm dicker biaxial streckorientierter Polyethylenterephthalatfolie (®Hostaphan 4000) wurden mit einem im Handel erhältlichen Blitzlampensystem (Modell FB-300 der Maxwell Laboratories), das mit zwei 5"-Xenongaslampen ausgerüstet ist, jeweils auf einer Oberfläche bestrahlt. Die technischen Daten des Modells FB-300 sind wie folgt:

## Tabelle I

| | |
|---|---|
| Strahlungsdichte an der Oberfläche des Blitzlampenkopfes | 3 J/cm$^2$ |
| Fläche, die von einem Kopf bestrahlt wird, gemessen an der Oberfläche des Kopfes | 2" x 12" |
| Anzahl der Köpfe | 2 |
| pro Impuls insgesamt abgegebene Strahlungsenergie | 900 J |
| Impulsdauer | 1 ms |
| maximale Impulsfrequenz | 1 Impuls/s |

Die elf Proben wurden nur einseitig bestrahlt und dann auf beiden Seiten mit dem oben beschriebenen Chloroformtest auf ihre Oberflächenorientierung untersucht. Dazu brachte man einen Tropfen Chloroform auf den nichtbestrahlten Abschnitt jeder Polyesterprobe auf und ließ den Tropfen dann über den bestrahlten Bereich laufen. Jede Probe wurde ebenso auf der nichtbestrahlten Seite bzw. "Rückseite" der Folie auf amorphe Oberflächen geprüft.

Die Heißsiegelhaftung der bestrahlten Polyethylenterephthalatfolienproben wurde nur im bestrahlten Bereich mit einem Labor-Heißsiegelgerät ("gradient type" der Fa. Sentinel, Modell 24 ASG, Hersteller Packaging Industries, P.O.Box 457, Hyannis, MA 02601, USA) geprüft. Das Heißsiegelgerät wurde zunächst

5

auf eine Temperatur von 205°C eingestellt bei 6 s Verweildauer und 280 kPa Druck. Heißsiegeltemperatur und Verweildauer wurden allmählich bis auf 121°C bzw. 1 s reduziert. Die Heißsiegelhaftung prüfte man, indem man jede bestrahlte Probe aufeinanderfaltete, den einen Abschnitt der bestrahlten Oberfläche auf den anderen heißsiegelte und versuchte, die entstandene Heißsiegelung von Hand auseinanderzuziehen. Die Prüfungsbedingungen und -ergebnisse sind in Tabelle II aufgeführt.

## Tabelle II

| Probe | Abstand | Strahlungs-energie | Chloroform-test | Heißsiegelhaftung |
|---|---|---|---|---|
| 57-1 | 3 cm | 11 J/cm$^2$ | klar | gut (205°C, 6 s, |
| Rückseite | | | klar | 280 kPa) |
| 57-2 | 3 cm | 14 J/cm$^2$ | opak | gut (gleiche Be- |
| Rückseite | | | klar | dingungen) |
| 57-3 | 5 cm | 9 J/cm$^2$ | opak | gut (gleiche Be- |
| Rückseite | | | klar | dingungen) |
| 57-4 | 5 cm | 8,5 J/cm$^2$ | opak | gut (gleiche Be- |
| Rückseite | | | klar | dingungen) |
| 57-5 | 5 cm | 8 J/cm$^2$ | nahezu klar | gut (gleiche Be- |
| Rückseite | | | klar | dingungen) |
| 57-6 | 5 cm | 8 J/cm$^2$ | nahezu klar | gut (gleiche Be- |
| Rückseite | | | klar | dingungen) |
| 57-7 | 5 cm | 8,5 J/cm$^2$ | opak | gut (150°C, 6 s, |
| Rückseite | | | klar | 280 kPa) |
| 57-8 | 5 cm | 8,5 J/cm$^2$ | opak | gut (150°C, 3 s, |
| Rückseite | | | klar | 280 kPa) |
| 57-9 | 5 cm | 8,5 J/cm$^2$ | opak | gut (gleiche Be- |
| Rückseite | | | klar | dingungen) |
| 57-10 | 5 cm | 8,5 J/cm$^2$ | opak | gut (150°C, 2 s, |
| Rückseite | | | klar | 280 kPa) |
| 57-11 | 5 cm | 8,5 J/cm$^2$ | opak | gut (150°C, 1 s, |
| Rückseite | | | klar | 280 kPa) |

Beispiel 2

Zwölf Proben von 12 μm dicker biaxial orientierter Polyethylenterephthalatfolie (®HOSTAPHAN 2000[+]) wurden bestrahlt und mit Hilfe der in Beispiel 1 beschriebenen Vorrichtungen und allgemeinen Verfahren auf den amorphen Zustand ihrer Oberfläche und ihre Heißsiegelfähigkeit geprüft. Die Prüfungsbedingungen und -ergebnisse sind in der nachfolgenden Tabelle III aufgeführt.

+ ®HOSTAPHAN ist ein eingetragenes Warenzeichen der Hoechst AG. Die Polyethylenterephthalatfolie ®HOSTAPHAN 2000 enthält Ton und Calciumcarbonat, wodurch die Gleiteigenschaften dieser Polyesterfolie verbessert werden. ®HOSTAPHAN 4000 dagegen enthält weder Ton noch Calciumcarbonat. Beide Polyesterfolienerzeugnisse sind von der American Hoechst Corporation, Route 202-206 North, Somerville, New Jersey 08876, USA, zu beziehen.

EP 0 189 808 B1

## Tabelle III

| Probe | Abstand | Strahlungs-energie | Chloroform-test | Heißsiegelhaftung |
|---|---|---|---|---|
| 48-1 | 5 cm | 9 J/cm$^2$ | opak | zu faltig/kein |
| Rückseite | | | klar | Versuch |
| 48-2 | 5 cm | 7 J/cm$^2$ | klar | keine amorphe |
| Rückseite | | | klar | Schicht/kein Versuch |
| 48-3 | 5 cm | 8 J/cm$^2$ | opak | gut (121°C, 1 s, |
| Rückseite | | | klar | 280 kPa) |
| 48-4 | 5 cm | 7,5 J/cm$^2$ | opak | schlecht (gleiche |
| Rückseite | | | klar | Bedingungen) |
| 48-5 | 5 cm | 7,5 J/cm$^2$ | opak | gut (gleiche Be- |
| Rückseite | | | klar | dingungen) |
| 48-6 | 5 cm | 7,5 J/cm$^2$ | opak | gut (gleiche Be- |
| Rückseite | | | klar | dingungen) |
| 48-7 | 5 cm | 7,5 J/cm$^2$ | opak | gut (gleiche Be- |
| Rückseite | | | klar | dingungen) |
| 48-8 | 5 cm | 7,5 J/cm$^2$ | opak | gut (gleiche Be- |
| Rückseite | | | klar | dingungen) |
| 48-9 | 5 cm | 7,5 J/cm$^2$ | opak | gut (gleiche Be- |
| Rückseite | | | klar | dingungen) |
| 48-10 | 5 cm | 7,5 J/cm$^2$ | opak | gut (gleiche Be- |
| Rückseite | | | klar | dingungen) |
| 48-11 | 5 cm | 7,0 J/cm$^2$ | nahezu klar | schlecht (gleiche |
| Rückseite | | | klar | Bedingungen) |
| 48-12 | 5 cm | 7,0 J/cm$^2$ | opak | gut (gleiche Be- |
| Rückseite | | | klar | dingungen) |

Beispiel 3

Sechzehn Proben von 75 μm dicker biaxial orientierter Polyethylenterephthalatfolie (®HOSTAPHAN 2000) wurden bestrahlt und dann mit Hilfe der in Beispiel 1 beschriebenen Vorrichtungen und allgemeinen Verfahren auf den amorphen Zustand ihrer Oberfläche und ihre Heißsiegelhaftung geprüft. Die Prüfungsbedingungen und -ergebnisse sind in der nachfolgenden Tabelle IV aufgeführt.

7

Tabelle IV

| Probe | Abstand | Strahlungs-energie | Chloroform-test | Heißsiegelhaftung |
|---|---|---|---|---|
| 300-1 | 5 cm | 7,0 J/cm$^2$ | klar | keine (121°C, 1 s, |
| Rückseite | | | klar | 280 kPa) |
| 300-2 | 5 cm | 9,0 J/cm$^2$ | klar | keine (gleiche Be- |
| Rückseite | | | klar | dingungen) |
| 300-3 | 4 cm | 9,0 J/cm$^2$ | klar | keine (gleiche Be- |
| Rückseite | | | klar | dingungen) |
| 300-4 | 4 cm | 11,5 J/cm$^2$ | opak | wenig (150°C, 1 s, |
| Rückseite | | | klar | 280 kPa) |
| 300-5 | 4 cm | 10,0 J/cm$^2$ | klar | keine (150°C, 2 s, |
| Rückseite | | | klar | 280 kPa) |
| 300-6 | 3 cm | 11 J/cm$^2$ | opak | wenig (gleiche Be- |
| Rückseite | | | klar | dingungen) |
| 300-7 | 3 cm | 12-13 J/cm$^2$ | opak | wenig (gleiche Be- |
| Rückseite | | | klar | dingungen) |
| 300-8 | 3 cm | 14 J/cm$^2$ | opak | befriedigend (glei- |
| Rückseite | | | klar | che Bedingungen) |
| 300-9 | 3 cm | 12-13 J/cm$^2$ | opak | befriedigend (glei- |
| Rückseite | | | klar | che Bedingungen) |
| 300-10 | 3 cm | 12-13 J/cm$^2$ | opak | gut (gleiche Be- |
| Rückseite | | | klar | dingungen) |
| 300-11 | 3 cm | 12-13 J/cm$^2$ | opak | gut (gleiche Be- |
| Rückseite | | | klar | dingungen) |
| 300-12 | 3 cm | 12-13 J/cm$^2$ | opak | gut (gleiche Be- |
| Rückseite | | | klar | dingungen) |
| 300-13 | 3 cm | 12-13 J/cm$^2$ | opak | gut (gleiche Be- |
| Rückseite | | | klar | dingungen) |

Fortsetzung Tabelle IV

| Probe | Abstand | Strahlungs-energie | Chloroform-test | Heißsiegelhaftung |
|---|---|---|---|---|
| 300-14 | 3 cm | 12-13 J/cm$^2$ | opak | gut (gleiche Be- |
| Rückseite | | | klar | dingungen) |
| 300-15 | 3 cm | 11 J/cm$^2$ | opak | befriedigend (glei- |
| Rückseite | | | klar | che Bedingungen) |
| 300-16 | 3 cm | 14 J/cm$^2$ | opak | gut (gleiche Be- |
| Rückseite | | | klar | dingungen) |

Beispiel 4

8

Unbestrahlte Vergleichsproben von 12 $\mu$m dicker und 75 $\mu$m dicker biaxial orientierter Polyethylenterephthalatfolie (®HOSTAPHAN 2000) wurden mit Hilfe der in Beispiel 1 beschriebenen Vorrichtungen und allgemeinen Verfahren auf den amorphen Zustand ihrer Oberfläche und ihre Heißsiegelhaftung geprüft. Die Prüfungsbedingungen und -ergebnisse sind in der nachfolgenden Tabelle V angegeben.

## Tabelle V

| Probe | Abstand | Strahlungs-energie | Chloroform-test | Heißsiegelhaftung |
|---|---|---|---|---|
| 48-13 | unbestrahlt | | klar | schlecht (121°C, 1 s, |
| Rückseite | | | klar | 280 kPa) |
| 300-17 | unbestrahlt | | klar | keine (150°C, 2 s, |
| Rückseite | | | klar | 280 kPa) |

## Ansprüche

1. Verfahren zur Herstellung einer heißsiegelfähigen Verpackungsfolie aus thermoplastischem Kunststoff, dadurch gekennzeichnet, daß eine Folie aus nicht siegelfähigem thermoplastischem Kunststoff auf wenigstens einer Oberfläche mit Impulsen elektromagnetischer Strahlung einer Wellenlänge im Bereich des infraroten bis ultravioletten Lichtes behandelt wird, wobei die Strahlungsimpulse eine Dauer im Bereich von 0,2 bis 2 ms haben.

2. Verfahren nach Anspruch 1, dadurch gekennzeichnet, daß pro Strahlungsimpuls eine Strahlungsenergie im Bereich von 7 bis 14 Joule je $cm^2$ Folienoberfläche an die Folie abgegeben wird.

3. Verfahren nach Anspruch 1 oder 2, dadurch gekennzeichnet, daß die elektromagnetische Strahlung von einer mit Xenon gefüllten Quarzlampe erzeugt wird.

4. Verfahren nach einem der Ansprüche 1 bis 3, dadurch gekennzeichnet, daß die Folie nach dem Extrusionsverfahren hergestellt, durch biaxiales Strecken orientiert, danach hitzefixiert und anschließend mit elektromagnetischer Strahlung behandelt wird.

5. Heißsiegelfähige Folie, hergestellt nach dem Verfahren nach einem der Ansprüche 1 bis 4, dadurch gekennzeichnet, daß sie aus Polyester, bevorzugt aus Polyethylenterephthalat, besteht.

6. Heißsiegelfähige Folie, hergestellt nach dem Verfahren nach einem der Ansprüche 1 bis 4, dadurch gekennzeichnet, daß sie aus Polyolefin, bevorzugt aus Polypropylen, besteht.

7. Heißsiegelfähige Folie, hergestellt nach dem Verfahren nach einem der Ansprüche 1 bis 4, dadurch gekennzeichnet, daß sie aus Polyamid besteht.

8. Heißsiegelfähige Folie nach einem der Ansprüche 5 bis 7, dadurch gekennzeichnet, daß sie einschichtig ist.

9. Heißsiegelfähige Folie nach einem der Ansprüche 5 bis 7, dadurch gekennzeichnet, daß sie mehrschichtig ist.

## Claims

9

1. Process for the production of a heat-sealable packaging film of a thermoplastic material, wherein a film of a non-sealable thermoplastic is treated, on at least one surface thereof, with pulses of electromagnetic radiation having a wavelength in the region from infrared to ultraviolet light, the pulses of radiation having a duration in the range from 0.2 to 2 ms.

2. The process as claimed in claim 1, wherein a radiant energy ranging from 7 to 14 Joule/cm² of film surface is delivered to the film per pulse of radiation.

3. The process as claimed in claim 1 or 2, wherein the electromagnetic radiation is generated by a xenon-filled quartz lamp.

4. The process as claimed in any of claims 1 to 3, wherein the film is fabricated according to the extrusion process, oriented by biaxial stretching, then heat-set and thereafter treated with electromagnetic radiation.

5. A heat-sealable film prepared according to the process as claimed in any of claims 1 to 4, wherein the film comprises a polyester, preferably polyethylene terephthalate.

6. A heat-sealable film prepared according to the process as claimed in any of claims 1 to 4, wherein the film comprises a polyolefin, preferably polypropylene.

7. A heat-sealable film prepared according to the process as claimed in any of claims 1 to 4, which comprises a polyamide.

8. A heat-sealable film as claimed in any of claims 5 to 7, which is a monolayer film.

9. A heat-sealable film as claimed in any of claims 5 to 7, which is a multi-layer film.


**Revendications**

1. Procédé de fabrication d'une feuille d'emballage thermoscellable en matière thermoplastique, caractérisé en ce l'on traite une feuille en matière thermoplastique non scellable, sur au moins une face, avec des impulsions de rayonnement électromagnétique d'une longueur d'onde allant de l'infrarouge à l'ultraviolet, lesdites impulsions de rayonnement ayant une durée de 0,2 à 2 ms.

2. Procédé selon la revendication 1, caractérisé en ce qu'on fournit à la feuille, par impulsion lumineuse, une énergie de rayonnement de 7 à 14 Joule par cm² de surface de feuille.

3. Procédé selon l'une des revendications 1 ou 2, caractérisé en ce que le rayonnement électromagnétique est produit par une lampe à quartz remplie de xénon.

4. Procédé selon l'une des revendications 1 à 3, caractérisé en ce que la feuille, fabriquée par extrusion, est orientée biaxialement, puis thermofixée et ensuite traitée avec un rayonnement électromagnétique.

5. feuille thermoscellable, fabriquée selon le procédé de l'une des revendications 1 à 4, caractérisée en ce qu'elle est constituée de polyester, de préférence de poly(téréphtalate d'éthylène).

6. Feuille thermoscellable, fabriquée selon le procédé de l'une des revendications 1 à 4, caractérisée en ce qu'elle est constituée de polyoléfine, de préférence de polypropylène.

7. Feuille thermoscellable, fabriquée selon le procédé de l'une des revendications 1 à 4, caractérisée en ce qu'elle est constituée de polyamide.

8. Feuille thermoscellable selon l'une des revendications 5 à 7, caractérisée en ce qu'elle est monocouche.

9. Feuille thermoscellable selon l'une des revendications 5 à 7, caractérisée en ce qu'elle est multicou-

che.